# EUROPÄISCHE PATENTSCHRIFT

(11) **EP 2 029 409 B1**
(45) Veröffentlichungstag und Bekanntmachung des Hinweises auf die Patenterteilung: **11.11.2009**
(21) Anmeldenummer: 07729689.5
(22) Anmeldetag: 31.05.2007
(51) Int. Cl.: B60T 13/74, B60T 11/04, B60T 7/08, F16H 57/04, B60T 8/171, F16D 66/00

(54) **VERFAHREN UND VORRICHTUNG ZUM BETÄTIGEN EINER PARKBREMSE**
METHOD AND DEVICE FOR ACTUATING A PARKING BRAKE
PROCEDE ET DISPOSITIF D'ACTIONNEMENT D'UN FREIN DE STATIONNEMENT

(30) Priorität: 01.06.2006 DE 102006025704
(43) Veröffentlichungstag der Anmeldung: 04.03.2009
(73) Patentinhaber: Continental Automotive GmbH, 30165 Hannover (DE)
(72) Erfinder: REITMEIER, Willibald, 93155 Hohenschambach (DE)
(86) Internationale Anmeldenummer: PCT/EP2007/055276
(87) Internationale Veröffentlichungsnummer: WO 2007/138087

(56) Entgegenhaltungen:
- DE-A1- 10 356 096
- DE-A1-102004 059 688
- DE-U1- 29 622 787

## Beschreibung

Die vorliegende Erfindung betrifft ein Verfahren und eine. Vorrichtung zum Betätigen mindestens einer Parkbremse für ein Fahrzeugrad.

Betätigungsvorrichtungen für Parkbremse (Feststellbremsen), die als elektrische Parkbremsen (EPB) mit Seilzugbetätigung (Cable-Puller) ausgeführt sind, umfassen jeweils einen Antrieb in Form eines elektrischen Motors sowie eine Kraftübertragungseinrichtung in Form eines Zahnradgetriebes, eines Spindeltriebes und einer Seilzuganordnung. Die Betätigungsvorrichtung ist ferner üblicherweise mit einer Einrichtung zum Erfassen der Anzugskraftkomponente der Parkbremse versehen. Diese Einrichtung besteht im Allgemeinen aus einem separaten Sensor in Form beispielsweise eines Dickschichtsensors, der die Anzugskraftkomponente unmittelbar erfasst, oder einem Wegsensor, der die Anzugskraftkomponente indirekt über eine Wegmessung ermittelt. Der Sensor ist entweder am Ausgang des Spindeltriebes der Kraftübertragungseinrichtung oder an der Parkbremse selbst angeordnet.

Aus DE 103 56 096 A1 sind ein Verfahren und eine Vorrichtung zum Betätigen einer Feststellbremsanlage für Fahrzeuge mit einer einen motorischen Antrieb, beispielsweise einen Elektromotor, aufweisenden Stelleinheit zum Feststellen oder Lösen der Feststellbremsanlage, bekannt. Zum Feststellen ist eine definierte Feststellkraft vorgegeben und nicht flüchtig gespeichert. Beim Betätigen der Feststellbremsanlagegibt ein Kraftsensor bei Erreichen:einer definierten Bremskraft ein Signal ab Dieses Signal dient als Referenz für mindestens eine auswertbare und ansteuerbare Variable der Feststellbremsanlage, die über eine mathematische Funktion mit der Bremskraft korreliert. Mittels der Variablen erfolgt ein An steuern der Feststellbremsanlage, beispielsweise zum Abschalten des motorischen Antriebs.

Der vorliegenden Erfindung liegt die Aufgabe zugrunde, ein Verfahren und eine Vorrichtung zum Betätigen mindestens einer Parkbremse für ein Kraftfahrzeug-Rad zu schaffen, bei denen eine andere und insbesondere einfachere Möglichkeit zum Erfassen der Anzugskraftkomponente der Parkbremse vorgesehen ist.

Ein Verfahren und eine Vorrichtung gemäß der Erfindung zum Lösen dieser Aufgabe-sind in Patentanspruch 1 bzw. Patentanspruch 2 definiert.

Erfindungsgemäß ist vorgesehen, dass Reibung- und Alterungsverluste der Kraftübertragungseinrichtung der Parkbremse minimiert werden und zum Erfassen der Anzugskraftkomponente der Parkbremse eine Kraftmessung unmittelbar an dem oder durch den Antrieb der Parkbremse vorgenommen wird.

Die vorliegende Erfindung geht von folgender Überlegung aus: grundsätzlich könnte die Anzugskraft der Parkbremse durch Erfassen der Antriebskraft des Antriebs, beispielsweise durch Messen des Stroms des Elektromotors, erfasst werden. Dem steht jedoch entgegen, dass sich der Wirkungsgrad der Kraftübertragungseinrichtung im Lauf ihrer Lebensdauer, insbesondere wegen des Abriebs im Zahnradgetriebe und Spindeltrieb, erheblich ändert, was die Genauigkeit der Krafterfassung entsprechend beeinträchtigen würde. Die Komponenten der Kraftübertragungseinrichtung werden zwar beim Einbau mit Schmiermittel benetzt. Bei längerer Betriebsdauer kann es jedoch zu einem Abreißen bis hin zu einem vollständigen Verlust des Schmierfilms kommen, so dass die Ungenauigkeit bei der Erfassung der Anzugskraftkomponente einen zweistelligen Prozentbereich erreichen kann.

Aus diesem Grund werden gemäß der Erfindung die Reibungs- und Alterungsverluste der Kraftübertragungseinrichtung minimiert. Dies erfolgt dadurch, dass zumindest ein Teil der Kraftübertragungseinrichtung mit einer fluiddichten Umhüllung umgeben und die fluiddichte Umhüllung mit Schmierstoff gefüllt wird, um den betreffenden Teil der Kraftstoffübertragungseinrichtung kontinuierlich und homogen mit dem Schmierstoff zu umspülen. Auf diese Weise können die mechanischen Einflüsse der Alterung insbesondere im Bereich des Zahnradgetriebes und des Spindeltriebes vernachlässigbar klein gehalten werden.

Die Kraftmessung kann dann unmittelbar an dem oder durch den Antrieb vorgenommen werden. Gemäß einer Möglichkeit wird am Antrieb ein entsprechender Sensor angeordnet. Gemäß der anderen Möglichkeit erfolgt eine direkte Erfassung der dem Antrieb zugeführten Energie oder einer hiervon ableitbaren Größe, beispielsweise durch Messen des zugeführten Stroms eines als Elektromotor ausgebildeten Antriebs.

Im letztgenannten Fall kann auf einen separaten Sensor verzichtet werden. Ein weiterer Vorteil der Erfindung besteht darin, dass der Verschleiß der Komponenten der Kraftübertragungseinrichtung minimiert wird. Dies erlaubt gegebenenfalls eine Verringerung der Abmessungen der mechanischen Komponenten und eine insgesamt kompaktere Bauart.

Ein weiterer Vorteil der Erfindung besteht darin, dass der die Komponenten der Kraftübertragungseinrichtung umspülende Schmierstoff für eine erhebliche Dämpfung des Systems sowohl hinsichtlich mechanischer Schwingungen wie auch hinsichtlich Geräuschbildung sorgt, was durch entsprechende Wahl des Schmierstoffes begünstigt werden kann. Als Schmierstoff kommen sowohl flüssige wie auch feste Schmierstoffe in Frage.

Es versteht sich, dass die Betätigungsvorrichtung sowohl für eine einzelne Bremse wie auch für mehrere Bremsen, insbesonder zwei Bremsen, ausgelegt werden kann. Die im Stand der Technik vorgesehenen Nachstellverfahren zum Ausgleichen der Bremsbelababnutzung der Parkbremse können selbstverständlich auch bei der erfindungsgemäß ausgebildeten Betätigungsvorrichtung für die Parkbremse vorgesehen werden.

Weitere vorteilhafte Ausgestaltungen der Erfindung ergeben sich aus den abhängigen Patentansprüchen.

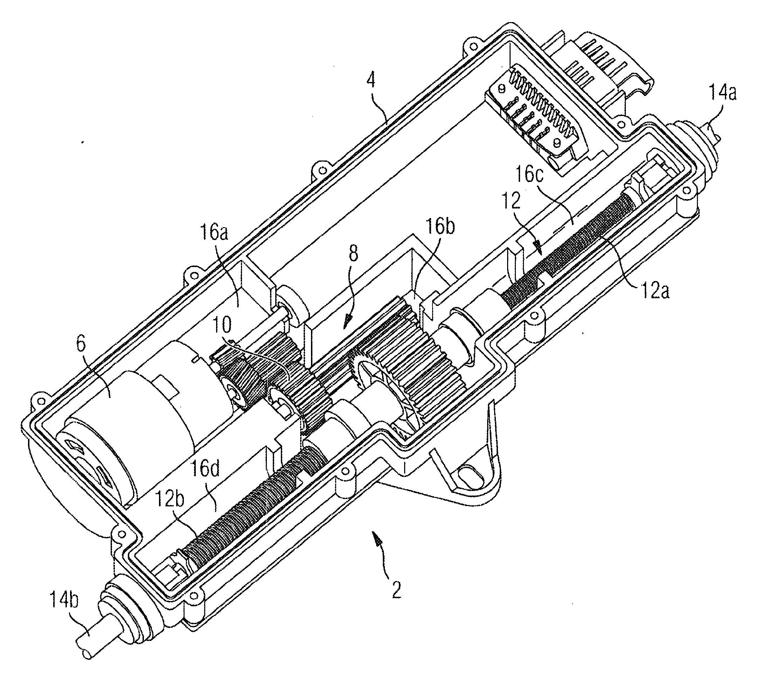

Anhand der einzigen Figur der beigefügten Zeichnung, die in perspektivischer Draufsicht einen Teil einer herkömmlichen Betätigungsvorrichtung (Cable-Puller) für zwei Parkbremsen zeigt, werden weitere Einzelheiten und Vorteile der vorliegenden Erfindung erläutert.

Die in der Figur dargestellte Betätigungsvorrichtung 2 besteht aus einem so genannten Cable-Puller zum Betätigen einer elektrischen Parkbremse (EPB) mit zwei einzelnen Rad-Parkbremsen (nicht gezeigt) für zwei Räder eines Kraftfahrzeuges. Wie dargestellt, weist die Betätigungsvorrichtung 2 ein Gehäuse 4 auf, das normalerweise von einem Deckel (nicht gezeigt) verschlossen wird.

Innerhalb des Gehäuses sind ein Antrieb 6 in Form eines Elektromotors sowie ein Teil einer Kraftübertragungseinrichtung 8 angeordnet. Die Kraftübertragungseinrichtung 8 besteht aus einem Zahnradgetriebe 10, einem Spindeltrieb 12 mit einer rechtsseitigen Spindel 12a und einer linksseitigen Spindel 12b sowie einer Kabelzuganordnung mit einem rechtsseitigen Kabel 14a und einem linksseitigen Kabel 14b, um die Antriebskraft des Antriebs 6 auf die beiden Rad-Parkbremsen (nicht gezeigt) zu übertragen. Da der Aufbau und die Funktionsweise eines derartigen "Cable-Pullers" bekannt sind, wird hierauf nicht näher eingegangen.

Das Zahnradgetriebe 10 und der Spindeltrieb 12 sind in Kammern 16a, 16b, 16c und 16d des Gehäuses 4 angeordnet. Erfindungsgemäß werden diese Kammern so ausgebildet, dass sie eine fluiddichte Umhüllung der betreffenden Komponenten der Kraftübertragungseinrichtung 8 bilden. Diese fluiddichte Umhüllung wird mit einem Schmierstoff flüssiger oder fester Form gefüllt, so dass die betreffenden Komponenten der Kraftübertragungseinrichtung kontinuierlich und homogen von dem Schmierstoff umspült werden. Die Kammern 16a, 16b, 16c und 16d können getrennt voneinander oder miteinander verbunden ausgebildet werden. Im Übrigen können auch die zum Beispiel als Bowdenzüge ausgebildeten Kabel 14a, 14b der Kabelanordnung mit Schmierstoff gefüllt werden.

Wie bereits eingangs erläutert wurde, sorgt die Schmierstofffüllung der betreffenden fluiddichten Umhüllung für eine Minimierung der Reibungs- und Alterungsverluste auf dem mechanischen Kraftübertragungsweg zwischen dem Antrieb 6 und den Rad-Parkbremsen. Wesentlich hierbei ist, dass sich der Wirkungsgrad der Kraftübertragungseinrichtung 8 über der Lebensdauer der Betätigungsvorrichtung 2 praktisch nicht ändert.

Dies erlaubt es, die Erfassung der Anzugskraftkomponente der Rad-Parkbremsen nicht, wie im Stand der Technik, am Ausgang des Spindeltriebes 12, sondern am Antrieb 6 bzw. durch den Antrieb 6 selbst vorzunehmen.

Eine Möglichkeit hierzu besteht darin, dass ein entsprechender Sensor (nicht gezeigt) am Antrieb 6 angeordnet wird. Es kann sich hierbei - im Gegensatz zum Stand der Technik - um einen stationär angeordneten Sensor handeln, was die Sensorausbildung entsprechend vereinfacht.

Gemäß einer anderen Möglichkeit wird die Kraftmessung unmittelbar durch den Antrieb 6 selbst vorgenommen. Dies erfolgt vorzugsweise durch Messen des dem Antrieb 6 (Elektromotor) zugeführten elektrischen Stromes, wenngleich auch andere Betriebsgrößen des Antriebs 6 wie zum Beispiel sein Drehmoment erfasst werden können. Ein gesonderter Sensor ist dann nicht mehr erforderlich.

Da sich bei der erfindungsgemäß ausgebildeten Betätigungsvorrichtung der Wirkungsgrad der Kraftübertragungseinrichtung aufgrund der Schmierstoffumspülung der betreffenden Kraftübertragungskomponenten praktisch nicht ändert, lässt sich durch die Krafterfassung an dem oder durch den Antrieb 6 die an der Parkbremse wirkende Anzugskraftkomponente mit hoher Genauigkeit erfassen. Dies führt zu den eingangs geschilderten Vorteilen.

Die dargestellte Betätigungsvorrichtung 2 ist für zwei Rad-Parkbremsen ausgelegt. Es versteht sich jedoch, dass die Erfindung auch bei Betätigungsvorrichtungen einsetzbar ist, die für eine einzelne Parkbremse oder mehr als zwei Parkbremsen ausgelegt ist. Auch ist eine Betätigungsvorrichtung möglich, bei der die Kraftübertragung von einem gemeinsamen Spindeltrieb auf ein einziges Kabel übertragen wird, das sich dann in zwei oder mehrere getrennte Kabel zum Betätigen zweier oder mehrerer Rad-Parkbremsen verzweigt.

Als Schmierstoff wird vorzugsweise ein Schmierstoff gewählt, der für eine optimale Dämpfung des vom Schmierstoff umspülten Teils der Kraftübertragungseinrichtung sorgt. Diese Dämpfung wirkt sich sowohl im Hinblick auf mechanische Schwingungen (Erschütterungen) wie auch im Hinblick auf die Geräuschentwicklung der Betätigungsvorrichtung günstig aus. Wie bereits erwähnt, kommen sowohl flüssige wie auch feste Schmierstoffe in Frage.

Bei herkömmlichen Betätigungsvorrichtungen für derartige Parkbremsen erfolgt eine Rekalibrierung (Nullpunkteinstellung) durch Betätigen der Parkbremse und Abschalten der Betätigung beim Erreichen einer vorgegebenen Anzugskraft. Die vorliegende Erfindung bietet eine einfache Möglichkeit zum Überwachen und Nachstellen der Rekalibrierung (Nullpunkteinstellung) über der Lebensdauer, indem die Reibung im Kraftübertragungsweg zwischen Antrieb und Bremse erfasst wird. Zu diesem Zweck wird ein bremskraftloser Abschnitt der Betätigung des Antriebs dazu benutzt, die Reibung im Kraftübertragungsweg zu erfassen. Dies ist beispielsweise beim Lösen der Bremse oder beim Anziehen der Bremse während einer neutralen Wegstrecke vor Einrücken der Bremse möglich, da während dieses Abschnittes der Antriebbetätigung keine Anzugskraft auf die Bremse ausgeübt wird.

Wie bereits vorstehend erwähnt, ermöglicht die Erfindung die Einsparung eines Kraftsensors, eine Minimierung des Verschleißes der Kraftübertragungseinrichtung, eine Reduzierung der Abmessungen der mechanischen Komponenten, eine kompaktere Bauart sowie eine optimale Dämpfung der Kraftübertragungseinrichtung.

## Patentansprüche

1. Verfahren zum Betätigen mindestens einer Parkbremse für ein Fahrzeugrad, welche einen Antrieb (6), eine Kraftübertragungseinrichtung (8) sowie eine Einrichtung zum Erfassen der Anzugskraftkomponente der Parkbremse umfasst, **dadurch gekennzeichnet dass** Reibungs- und Alterungsverluste der Kraftübertragungseinrichtung (8) minimiert werden, indem mindestens ein Teil der Kraftübertragungseinrichtung (8) mit einer fluiddichten Umhüllung umgeben und die fluiddichte Umhüllung mit Schmierstoff gefüllt wird, um den betreffenden Teil der Kraftübertragungseinrichtung (8) kontinuierlich und homogen mit Schmierstoff zu umspülen, und dass zum Erfassen der Anzugskraftkomponente der Parkbremse eine Kraftmessung unmittelbar an dem oder durch den Antrieb (6) vorgenommen wird.

2. Vorrichtung zum Betätigen mindestens einer Parkbremse für ein Kraftfahrzeug-Rad, mit einem Antrieb (6), einer Kraftübertragungseinrichtung (8) sowie einer Einrichtung zum Erfassen der Anzugskraftkomponente der Parkbremse, **dadurch gekennzeichnet, dass** die Einrichtung zum Erfassen der Anzugskraftkomponente Mittel zum Minimieren der Reibungs- und Alterungsverluste der Kraftübertragungseinrichtung (8) aufweist, wobei die Mittel aus einer fluiddichten Umhüllung zumindest eines Teils der Kraftübertragungseinrichtung (8) und einer Füllung der Umhüllung mit Schmierstoff bestehen und, dass die Einrichtung zum Erfassen der Anzugskraftkomponente Mittel zur Kraftmessung unmittelbar an dem oder durch den Antrieb (6) aufweist.

3. Vorrichtung nach Anspruch 2, bei der die Kraftübertragungseinrichtung (8) ein Zahnradgetriebe (10), einen Spindeltrieb (12) und einen Kabelzug (14a, 14b) aufweist, **dadurch gekennzeichnet, dass** zumindest das Zahnradgetriebe (10) und der Spindeltrieb (T2) innerhalb der fluiddichten- Umhüllung angeordnet sind.

4. Vorrichtung nach Anspruch 3, bei der das Zahnradgetriebe (10) und der Spindeltrieb (12) zusammen mit dem Antrieb (6) in einem gemeinsamen Gehäuse (4) angeordnet sind, **dadurch gekennzeichnet, dass** die fluiddichte Umhüllung aus einer Kapselung einer das Zaunradgetriebe (10) und den Spindeltrieb (12) enthaltenden Kammer innerhalb des Gehäuses (4) besteht.

5. Vorrichtung nach Anspruch 3 oder 4, **dadurch gekennzeichnet, dass** der vorzugsweise als Bowdenzug ausgebildete Kabelzug (14a, 14b) mit Schmier-Stoff gefüllt ist.

6. Vorrichtung nach einem der Ansprüche 2 bis 5, **dadurch gekennzeichnet, dass** ein Schmierstoff vorgesehen ist, der für eine optimale Dämpfung des betreffenden Teils der Kraftübertragungseinrichtung (8) sorgt.

7. Vorrichtung nach einem der Ansprüche 2 bis 6, **dadurch gekennzeichnet, dass** die Mittel zur Kraftmessung aus einem am Antrieb (6) angeordneten Sensor bestehen.

8. Vorrichtung nach einem der Ansprüche 2 bis 6, **dadurch gekennzeichnet, dass** die Mittel zur Kraftmessung durch eine direkte Erfassung der dem Antrieb (6) zugeführten Energie oder einer hieraus ableitbaren Betriebsgröße des Antriebs (6) gebildet werden.

9. Vorrichtung nach Anspruch 8, bei der der Antrieb (6) ein Elektromotor ist, **dadurch gekennzeichnet, dass** der dem Elektromotor zugeführte Strom oder eine hiervon ableitbare Betriebsgröße des Elektromotors erfasst wird.

10. Vorrichtung nach einem der Ansprüche 2 bis 8, **gekennzeichnet durch** Kalibriermittel, die einen bremskraftlosen Abschnitt der Betätigung des Antriebs (6) zum Erfassen der in der Vorrichtung.wirkenden Reibungskraft benutzen, um eine Nullpunkteinstellung bei der Erfassung der Anzugskraftkomponente zu ermöglichen.

## Claims

1. Method for actuating at least one parking brake for a vehicle wheel, which parking brake comprises a drive (6), a force transmitting device (8) and a device for sensing the application force component of the parking brake, **characterized in that** friction losses and ageing losses of the force transmitting device (8) are minimized and, **in that** at least part of the force transmitting device (8) is surrounded by a fluidtight casing and the fluidtight casing is filled with lubricant in order to rinse the respective part of the force transmitting device (8) continuously and homogenously with lubricant, and **in that**, in order to sense the application force component of the parking brake, a force measurement is performed directly on the drive (6) or by means of the drive (6).

2. Device for actuating at least one parking brake for a motor vehicle wheel, having a drive (6), a force transmitting device (8) and a device for sensing the application force component of the parking brake, **characterized in that** the device for sensing the application force component has means for minimizing the friction losses and ageing losses of the force transmitting device (8) wherein the means for minimizing the friction losses and ageing losses of the force transmitting device (8) are composed of a fluidtight casing of at least part of the force transmitting device (8) and a filling of the casing with lubricant, and **in that** the device for sensing the application force component has means for measuring force directly on the drive (6) or by means of the drive (6).

3. Device according to Claim 2, in which the force transmitting device (8) has a gear mechanism (10), a spindle drive (12) and a cable pull (14a, 14b), **characterized in that** at least the gear mechanism (10) and the spindle drive (12) are arranged inside the fluidtight casing.

4. Device according to Claim 3, in which the gear mechanism (10) and the spindle drive (12) are arranged together with the drive (6) in a common housing (4), **characterized in that** the fluidtight casing is composed of an encapsulation of a chamber, containing the gear mechanism (10) and the spindle drive (12), inside the housing (4).

5. Device according to Claim 3 or 4, **characterized in that** the cable pull (14a, 14b) which is preferably embodied as a Bowden cable, is filled with lubricant.

6. Device according to one of Claims 2 to 5, **characterized in that** a lubricant is provided which ensures optimum damping of the respective part of the force transmitting device (8).

7. Device according to one of Claims 2 to 6, **characterized in that** the means for measuring force are composed of a sensor which is arranged on the drive (6).

8. Device according to one of Claims 2 to 6, **characterized in that** the means for measuring force are formed by direct sensing of the energy fed to the drive (6) or of an operational variable of the drive (6) which can be derived therefrom.

9. Device according to Claim 8, in which the drive (6) is an electric motor, **characterized in that** the current fed to the electric motor or an operational variable of the electric motor which can be derived therefrom is sensed.

10. Device according to one of Claims 2 to 8, **characterized by** calibration means which use a section of the actuation of the drive (6) which is without braking force to sense the frictional force acting in the device, in order to permit a zero point setting when the application force component is being sensed.

## Revendications

1. Procédé pour actionner au moins un frein de stationnement pour une roue de véhicule, qui comprend un dispositif d'entraînement (6), un dispositif de transmission (8) ainsi qu'un dispositif pour enregistrer la composante d'effort d'entraînement du frein de stationnement, **caractérisé en ce que** les pertes par friction et par vieillissement du dispositif de transmission (8) sont minimisées en entourant au moins une partie du dispositif de transmission (8) avec une chemise étanche aux fluides et la chemise étanche aux fluides est remplie d'un lubrifiant pour baigner la partie concernée du dispositif de transmission (8) de manière continue et homogène avec le lubrifiant, et **en ce que**, pour enregistrer la composante d'effort d'entraînement du frein de stationnement, une mesure de force est effectuée directement sur ou par le dispositif d'entraînement (6).

2. Dispositif pour actionner au moins un frein de stationnement pour une roue de véhicule automobile, comprenant un dispositif d'entraînement (6), un dispositif de transmission (8) ainsi qu'un dispositif pour enregistrer la composante d'effort d'entraînement du frein de stationnement, **caractérisé en ce que** le dispositif pour enregistrer la composante d'effort d'entraînement présente des moyens pour minimiser les pertes par friction et par vieillissement du dispositif de transmission (8), lesquels moyens sont constitués d'une chemise étanche aux fluides d'au moins une partie du dispositif de transmission (8) et d'un remplissage de la chemise par un lubrifiant, et **en ce que** le dispositif pour enregistrer la composante d'effort d'entraînement présente des moyens pour mesurer la force directement sur ou par le dispositif d'entraînement (6).

3. Dispositif selon la revendication 2, dans lequel le dispositif de transmission (8) présente une transmission par engrenages (10), une commande à broche (12) et un dispositif de traction à câble (14a, 14b), **caractérisé en ce que** la transmission par engrenages (10) et la commande à broche (12) sont aménagées à l'intérieur de la chemise étanche aux fluides.

4. Dispositif selon la revendication 3, dans lequel la transmission par engrenages (10) et la commande à broche (12) sont aménagées conjointement avec le dispositif d'entraînement (6) dans un boîtier commun (4), **caractérisé en ce que** la chemise étanche aux fluides est constituée d'un blindage d'une chambre contenant la transmission par engrenages (10) et la commande à broche (12) à l'intérieur du boîtier (4).

5. Dispositif selon la revendication 3 ou 4, **caractérisé en ce que** le dispositif de traction à câble (14a, 14b) conformé de préférence en câble de Bowden est rempli de lubrifiant.

6. Dispositif selon l'une quelconque des revendications 2 à 5, **caractérisé en ce qu'**il est prévu un lubrifiant qui veille à un amortissement optimal de la partie concernée du dispositif de transmission (8).

7. Dispositif selon l'une quelconque des revendications 2 à 6, **caractérisé en ce que** les moyens pour mesurer la force sont constitués d'un capteur aménagé sur le dispositif d'entraînement (6).

8. Dispositif selon l'une quelconque des revendications 2 à 6, **caractérisé en ce que** les moyens pour mesurer la force sont formés par un enregistrement direct de l'énergie acheminée au dispositif d'entraînement (6) ou d'une grandeur de fonctionnement du dispositif d'entraînement (6) qui peut en dériver.

9. Dispositif selon la revendication 8, dans lequel le dispositif d'entraînement (6) est un moteur électrique, **caractérisé en ce que** l'on enregistre le courant acheminé au moteur électrique ou une grandeur de fonctionnement du moteur électrique qui peut en dériver.

10. Dispositif selon l'une quelconque des revendications 2 à 8, **caractérisé par** des moyens d'étalonnage qui utilisent une section sans force de freinage de la commande du dispositif d'entraînement (6) pour enregistrer la force de friction agissant dans le dispositif afin de permettre un réglage du zéro lors de l'enregistrement de la composante d'effort d'entraînement.
